# EUROPEAN PATENT SPECIFICATION

(11) **EP 2 099 874 B1**
(45) Date of publication and mention of the grant of the patent: **13.08.2014**
(21) Application number: 07868772.0
(22) Date of filing: 16.11.2007
(51) Int. Cl.: C09D 11/02, C09D 11/00

(54) **PIGMENT-BASED NON-AQUEOUS INK-JET INKS**
NICHTWÄSSRIGE TINTENSTRAHLTINTEN AUF PIGMENTBASIS
ENCRES À JET D'ENCRE NON AQUEUSES À BASE DE PIGMENT

(30) Priority: 22.11.2006 US 604127
(43) Date of publication of application: 16.09.2009
(73) Proprietor: Hewlett-Packard Development Company, L.P., Houston, TX 77070 (US)
(72) Inventor: STRAMEL, Rodney, San Diego, California 92127-1899 (US); GELDENHUYS, Paul, 7800 Ottery (ZA); POWER, Richard, 7800 Ottery (ZA); CALITZ, Malan, 7800 Ottery (ZA); LOWNDES, Jamie, 7800 Ottery (ZA); KLEYN, John, 7800 Ottery (ZA)
(74) Representative: Liesegang, Eva
(86) International application number: PCT/US2007/084990
(87) International publication number: WO 2008/064125

(56) References cited:
- EP-A1- 1 528 086
- JP-A- 2006 083 243
- US-A- 4 990 186
- US-A1- 2004 266 907

## Description

### BACKGROUND OF THE INVENTION

The ink-jet printing industry uses different types of recording fluids such as oil-based inks, co-solvent-based (non-aqueous) inks, water-based inks, and solid inks (which are melted in preparation for dispensing). Co-solvent-based inks tend to be faster-drying than other inks, and as a result, are widely used for industrial printing. When co-solvent-based inks containing resins and other ingredients are jetted onto a substrate, the co-solvent(s) partially or fully evaporate from the ink, leaving the resin and other ingredients, such as pigment particles on the printed substrate in the form of a dry film.

Formulating an ink composition is often a balancing of desired qualities. For instance, more viscous inks, and even inks with greater surface tension, tend to show some better performance characteristics such as resistance to bleeding and feathering. However, the same inks also tend to have the undesired effects of longer drying times and a tendency to clog the print head apparatus, thus impeding the printing process and resulting in other undesirable attributes, e.g. poor dot spread, poor dot control, decreased print head firing frequency, etc. Typically, formulating inks often requires sacrificing some properties in order to gain or improve others. It would, thus, be valuable to provide a non-aqueous co-solvent-based ink that shows improved ink qualities including faster drying rates, increased print head firing frequency, better resistance to bleeding and feathering, and improved dot spread.

### DETAILED DESCRIPTION OF THE PREFERRED EMBODIMENT(S)

The present invention relates to a non-aqueous ink composition and to a method of printing in accordance with the appended claims.

Reference will now be made to exemplary embodiments, and specific language will be used herein to describe the same. It will nevertheless be understood that no limitation of the scope of the invention is thereby intended. In describing and claiming the present invention, the following terminology will be used in accordance with the definitions set forth below.

The singular forms "a," "an," and "the" include plural referents unless the context clearly dictates otherwise. Thus, for example, reference to "a pigment" typically includes one or more of such materials.

The term "solvent-based" when referring to inks of the present invention are non-aqueous inks that include at least one organic co-solvent (other than water).

As used herein, the term "system" when referring to a "co-solvent system" indicates that one or more co-solvents are present in that system. For example, a "main co-solvent system" can include a single organic co-solvent or multiple organic co-solvents, where the one or more co-solvents are present in an ink at 50 wt% or more. Co-solvents that are part of the "main co-solvent system" each have a surface tension of less than 32 dynes/cm. Likewise, a "second co-solvent system" can include a single organic co-solvent or multiple organic co-solvents, where the one or more co-solvents are present in an ink at 30 wt% or less. Co-solvents that are part of the "second co-solvent system" each have a surface tension of at least 32 dynes/cm. It is noted that the main co-solvent system and the second co-solvent system are part of a more general "non-aqueous co-solvent system."

As used herein, a plurality of items, compositional element, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Numerical values, such as ratios, concentrations, amounts, molecular sizes, etc., may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a weight range of 1 wt% to 20 wt% should be interpreted to include not only the explicitly recited concentration limits of 1 wt% to 20 wt%, but also to include individual concentrations such as 2 wt%, 3 wt%, 4 wt%, and sub-ranges such as 5 wt% to 15 wt%, 10 wt% to 20 wt%, etc.

Aspects of the present invention are directed to ink compositions and related methods. It is noted that compositions and methods of the present invention share certain commonalities and characteristics. Some of these characteristics will be discussed in the context of the compositions, and others will be described in the context of the methods. It should be noted that regardless of where discussed, each of the following descriptions applies generally to the compositions and methods of the present invention. Further, in the following detailed description, numerous specific details are set forth in order to provide a thorough understanding of the ink. However, it will be understood by those of ordinary skill in the art that the present ink may be practiced without these specific details. In other instances, well-known methods, procedures, formulation and compositions have not been described in detail so as not to obscure the nature of the present ink.

In accordance with embodiments of the present invention, an ink composition for ink-jet recording comprises a milled pigment, surfactant, a non-aqueous co-solvent system, and at least 2 wt% of resin solubilized in the ink composition. The non-aqueous co-solvent system includes from 50 wt% to 95 wt% of a main co-solvent system where each of the one or more co-solvent(s) have a surface tension of less than 32 dynes/cm at 25 °C. The non-aqueous co-solvent system also includes from 1 wt% to 30 wt% of a second co-solvent system where each of the one or more co-solvent(s) have a surface tension of greater than 32 dynes/cm at 25 °C, 36 dynes/cm at 25 °C, or even 38 dynes/cm at 25 °C. Further, the non-aqueous co-solvent system includes from 1 wt% to 10 wt% of gamma butyrolactone. Other co-solvents in addition to these may also be present, i.e. those that do not fit in any of the aforementioned categories. The ink composition is ink-jettable, and further, the second co-solvent system can optionally act to change the overall surface tension of the ink composition as a whole. Additionally or alternatively, the gamma butyrolactone and/or the resin can also raise the surface tension of the ink composition as a whole. In another embodiment, a method of printing an image can comprise ink-jetting the ink composition described above onto a media substrate.

Compositions and methods thus outlined have been found to exhibit a combination and range of desired qualities that have heretofore been difficult to obtain with conventional ink jet inks. By including the co-solvent and the gamma butyrolactone, the overall qualities of the ink, including ink performance and final print image quality, are improved compared to conventional non-aqueous inks. Specifically, the present ink compositions show increased print head firing frequency, improved dot spread on substrates, faster drying rates, better control over droplet size, improved dot control, improved dot gain, less color-to-color bleeding, less feathering, improved IQ, and less graininess of the final product.

The relative amounts of different components of the ink-jet inks can vary. For example, the main co-solvent system can be present in the ink-jet ink at from 50 wt% to 95 wt%, from 50 wt% to 90 wt%, or from 70 wt% to 90 wt%. The main co-solvent system can be a single co-solvent or a mixture of co-solvents, each having a surface tension of less than 32 dynes/cm at 25 °C. The main co-solvent system is not gamma butyrolactone, nor is it any co-solvent of the second co-solvent system, which must have a higher surface tension as described above. The second co-solvent can be a single co-solvent or mixture of co-solvents that can be present in an amount from 1 wt% to 30 wt%, from 2 wt% to 8 wt%, or from 3 wt% to 6 wt%. Further, the gamma butyrolactone can be present in the composition in an amount from 1 wt% to 10 wt%, from 2 wt% to 8 wt%, or from 3 wt% to 6 wt%. Additionally, the pigment can be present in the ink composition at from 0.1 wt% to 15 wt%, or alternatively, from 0.5 wt% to 10 wt%, or from 0.5 wt% to 6 wt%. Again, these ranges are related to the total pigment solids content, whether that content is from a single pigment or multiple pigments in the ink-jet ink. Next, the amount of resin that is solublized in the ink-jet ink may vary. One or more resin can be part of the total content that is solubilized in the ink. For example, In one embodiment, at least 2 wt% of the ink-jet ink composition includes solubilized resin or resins. Alternatively, the ink includes at least 3 wt% solubilized resin or resins, or even 4 wt% solubilized resin or resins. In one embodiment, the solubilized resin can be present at from 2 wt% to 5 wt%. In each of these embodiments, it is not required that all of the resin(s) present be solubilized in the ink-jet ink, but typically, the resin can be at least substantially solubilized in the ink.

In further detail, with respect to certain materials that can be used in the inks of the present invention, resins, co-solvents, pigments, and surfactants are described in greater detail.

### Non-Aqueous co-solvent System

The non-aqueous co-solvent system of the present invention includes a mixture of at least three distinct components: a main co-solvent system, a second co-solvent system, and gamma butyrolactone. It should be understood that all three components represent three distinct ingredient types, e.g. the gamma butyrolactone cannot act simultaneously as a second co-solvent system. Furthermore, the resin cannot act simultaneously as the second co-solvent system. Any non-aqueous glycol ether co-solvent(s) are non-limiting examples of co-solvents that are acceptable for use as part of or all or the main co-solvent system, provided the surface tension of the co-solvent(s) is less than 32 dynes/cm at 25 °C. Non-limiting examples of glycol ether co-solvent are ethylene glycol monobutyl ether, tripropylene glycol mono methyl ether, propylene glycol methyl ether, propylene glycol ethyl ether, propylene glycol butyl ether, dipropylene glycol mono methyl ether, dipropylene glycol ethyl ether, dipropylene glycol butyl ether, propylene glycol n-propyl ether, dipropylene glycol n-propyl ether, tripropylene glycol n-propyl ether, propylene glycol n-butyl ether, dipropylene glycol n-butyl ether, tripropylene glycol n-butyl ether, dipropylene glycol dimethyl ether (Proglyme). Esters and glycol ether acetate such as ethylene glycol monobutyl ether acetate, butyl glycolate, propylene glycol methyl ether acetate, ethyl lactate, butyl,lactate, n-propyl s-lactate and ethylhexyl-s-lactate, dipropylene glycol methyl ether acetate, and propylene glycol diacetate can also be used. Further, ketones such as diiso butyl ketone can also be desirable for use. It is noted that any single co-solvent or combination of co-solvents where each co-solvent has a surface tension of less than 32 dynes/cm at 25°C can be considered to be the main co-solvent system. It is also noted that to the extent that the above listed co-solvents can be modified to have a surface tension above 32 dynes/cm at 25 °C, they can be categorized in the second co-solvent system, particularly if they can raise the surface tension of the inks that are prepared in accordance with embodiments of the present invention as a whole.

The second co-solvent system can optionally increase the overall surface tension of the ink composition as a whole. The co-solvent can be selected from any non-aqueous co-solvent with a surface tension of greater than 32 dynes/cm at 25°C, 36 dynes/cm at 25 °C, or even 38 dynes/cm at 25 °C. Some of the useful co-solvents for inclusion in the second co-solvent system can have surface tensions greater than 40 dynes/cm at 25 °C. Non-limiting examples of co-solvents for use in the second co-solvent system include n-ethyl pyrrolidone (37.6 dynes/cm), N-methylpyrrolidone (40.7 dynes/cm), 1,3-butanediol (37.8 dynes/cm), propylene carbonate (41.4 dynes/cm), and glyceryl acetate (38.6 dynes/cm), 1,3-dimethyl-2-imidazolidinone (41 dynes/cm), 2-Pyrrolidone (46.18 dynes/cm), 1-octyl-2-pyrrolidone (35 dynes/cm), cyclohexanone (34 dynes/cm). In one embodiment, the second co-solvent system can be present in the composition in an amount sufficient to raise the surface tension of the ink composition as a whole by an amount of greater than 3 dynes/cm.

The third co-solvent component, gamma butyrolactone, is present in the ink composition, and can optionally also act to raise the surface tension of the ink overall. The gamma butyrolactone has beneficial effects with respect to the pigment solubilizing, and is therefore a desirable composition component for inclusion in the final ink composition. However, the usage of the gamma butyrolactone should be limited In amount as at higher concentrations, it tends to have caustic-type effects on the ink composition as a whole, as well as to ink-jet architecture. Usage of greater than 10% of gamma butyrolactone has been found to be too solvating to the overall ink composition, and interferes with the performance of the individual components and the ink as a whole. It is believed that this quality of the gamma butyrolactone imparts certain benefits to the ink. For example, the gamma butyrolactone can act as a "cleaner" of the printing nozzles. This co-solvent Is a very aggressive co-solvent that will dissolve many materials, providing, at least in part, this cleaning function. Gamma butyrolactone is also a slow evaporative co-solvent which aids in keeping components of the ink solubilized during nozzle firing and while the ink is drying on the substrate.

### Resins

Non-limiting examples of solvent-soluble resins that can be used in accordance with embodiments of the present invention include acrylic resins, polyester resins, polyurethane resins, vinyl chloride resins, and cellulose-based resins. Non-limiting examples of acrylic resins available commercially from ROHM & HAAS Company, Philadelphia, PA 19106 U.S.A. under the names Paraloid Acrylic resins as follows: A-11, A-12, A-101, A-10S, A-646, B-60, B-64, B-66, B-66T, B-66X, B-72, B-82, A-21, A-21 LV, B-44, B-44S, B-48N, B-48S, B-84, B-67, B-99N, XR-34, B-1225, DM-55, M-825, NAD-10V, and F-10. Other solvent-soluble resins that can be used include copolymers of vinyl chloride-vinyl acetate with and without functional groups, e.g., carboxyl and/or hydroxyl groups, including esters thereof, e.g., vinyl acetate esters. Some of these polymers are available commercially from WACKER Polymers GmbH, Burghausen D-84489 Germany under the names Vinnol Resins as follows: E 15/45, H 15/45, H 14/36, H 15/42, H 15/50, H 11/59, H 40/43, H 40/50, H 40/55, and H 40/60. Other Non-limiting examples of functionalized solvent-soluble resins that can be used are available commercially from WACKER Polymers GmbH under the names E 15/45M, H 15/45M, E 15/40A, E 15/48A, and E 22/48A. As described, it is desirable that the resin be at least partially soluble, but usually at least substantially soluble in the ink composition as a whole. In one embodiment, the resin can act to anchor the pigment to the printed substate.and/or to impart weatherability and chemical and abrasion resistance to the printed ink.

### Pigments

As also mentioned, the ink compositions include milled pigments. Other pigments and/or dyes can also be present. In accordance with embodiments of the present invention, the pigments are milled so that they can be appropriately sized for particular ink-jet ink applications. In one embodiment, the pigments are milled with the main co-solvent system (or at least one of the co-solvents thereor) of the final ink-jet ink composition, optionally together with the surfactants. The co-solvent and surfactant combination provide benefits to the milling process by stabilizing the pigment, thus producing a better performing and sized milled pigment. It is also believed that the presence of surfactants can decrease necessary milling time, and can also aid the milling process to create more uniformly-sized pigments. It is further theorized that surfactants present in the milling process can produce a solution of the pigment (both pre-milled and during milling), which is more conducive to effective milling, e.g. working to better disperse the pigment segments as they are milled.

The ink compositions can be of any color. In certain embodiments, the ink composition can cyan, magenta, yellow, or black. Alternatively, the ink composition can be light cyan, light magenta, pink, green, orange, blue, red, violet, etc. Likewise, the ink of the present invention can be included in an ink set. Such ink sets can include one or multiple inks as described herein. An ink set could, for example, include a cyan ink composition, a magenta ink composition, and a yellow ink composition, each formulated in accordance with the currently presented composition.

Non-limiting examples of pigments that can be used in accordance with embodiments of the present invention include yellow pigments having the following Yellow Pigment color index PY 83, PY 151, PY 150, and PY 154. Magenta pigments composed of Red pigment having color indices of PR 202, PR 254 and PR 122 and Violet pigment having color indices of PV 19, PV 23 and PV 29 can also be used. Blue pigments having color indices of PB 15:3, 15:4, 15:2, and 15:1, as well as Hostafine Blue B2G, as well as black pigments having color indices of PBL Black 7 are also useable. Microlith 4G-WA is another pigment that can be used. Examples of other pigments that can be used include so called "spot color pigments," which are pigments that are of a color other than cyan, magenta, yellow, or black, and which are difficult to reproduce by mixing colors. Specific spot color pigments that can be used include Cromophtal Orange GL (PO-64) or Microlith Green G-K (PG 7), both available from Ciba Company, Basel CH-4002 Switzerland.

### Surfactants

The surfactant(s) can be anionic, cationic, non-ionic, amphoteric, silicon-free, fluorosurfactants, polysiloxanes, etc. In one embodiment, the surfactant can be a polyether siloxane copolymer surfactant. More specific examples of such materials include surfactants available commercially from Tego Chemie Service GmbH 100 Goldschmidtstrasse, Essen D-45127 Germany, to improve substrate wetting under the names Wet ZFS 453, Glide 415, Glide 100, Glide 450 and Glide 410 or Leveling agents, under the name Glide A 115, Flow 300, Glide 420, Glide 406, Glide 411, Glide 435 and Glide 440.

In another embodiment, the surfactant can include organically modified poly-acrylates, such as those available commercially from EFKA Company, Heerenveen 8440 AN the Netherlands, e.g., EFKA-4340.

In still another embodiment, the surfactant can comprise one or more solvent-soluble or solvent dispersible components. Non-limiting examples of surfactants can include high molecular weight copolymers with pigment affinic groups, including block copolymers. Other specific examples of surfactants that can be used include those commercially available from BYK Chemie GmbH, Postfach 100245 Wesel D-46462 Germany under the names Disperbyk-115, Disperbyk-160, Disperbyk-161, Disperbyk-162, Disperbyk-163, Disperbyk-164, Disperbyk-166, Disperbyk-167, Disperbyk-169, Disperbyk-182, Disperbyk-174 and Disperbyk 184.

In one embodiment, the surfactants can Increase the pigment flow during milling, thereby increasing the effectiveness of the milling process. Additionally, the added surfactant can aid in the milling process to create smaller and more uniformly-sized pigments.

### Other Components and Pointing Substrates

In addition to the pigments), resin(s), surfactant), and non-aqueous solvent system, the composition can include other additives, such as wetting agents, dispersants, leveling agents, preservatives, defoaming agents, pH regulators, disinfectants, deodorants, perfumes, antioxidants, charge-adjusters, UV-ray absorbers, anti-molding agents, storage stability enhancing agents, and the like. Regarding these additives, typically, they are present in minor amounts. For example, solvent soluble or dispersible dispersant(s) can be present at from 0.5 wt% to 5 wt%. Generally, these components can each be present in the ink composition as a whole at from 0.01 wt% to 10 wt%.

It is also noted that the ink compositions prepared in accordance with embodiments of the present invention can be ink-jetted onto a media substrate or other type of substrate. In accordance with embodiments of the present invention, the ink-jet inks can possess good adhesion properties, which can adhere to a wide range of substrates, including papers, coated papers including photo media and commercial off-set media, plastics such as vinyls, and PVC, glass, and metals.

### EXAMPLES

The following examples illustrate the embodiments of the invention that are presently best known. However, it is to be understood that the following are only exemplary or illustrative of the application of the principles of the present invention. Thus, while the present invention has been described above with particularity, the following examples provide further detail in connection with what are presently deemed to be the most practical and preferred embodiments of the invention. It is also noted that in the following examples, all the examples are prepared in a similar manner to that described in Example 1.

### Example 1 - Cyan ink composition

A cyan ink composition is prepared in accordance with Table 1 below by adding Vinnol E15/45 to ethylene glycol monobutyl ether acetate (BEA) until it dissolves in the BEA. Next, Pigment Blue 15:3 is added as a powder and the entire composition is mixed until a homogenous dispersion is obtained. The mixture is then milled until a desired particle size of from 100 to 300 nm is reached. Pre-dissolved Vinnol E15/45 and Disperbyk D-167 is added to the milled dispersion and mixed for 30 minutes. BEA, is then added to the dispersion and mixed for another 30 minutes. The BEA and the propylene carbonate are then added to the dispersion which is mixed for approximately 30 minutes.

**Table 1**

| **Ingredient** | **Weight** % |
|---|---|
| BEA (ethylene glycol monobutyl ether acetate) | 75 - 90 |
| Propylene carbonate | 3 - 6 |
| Gamma butyrolactone | 3 - 6 |
| Disperbyk D-167 | 1 - 3 |
| Vinnol E15/45 (Vinyl chloride-vinyl acetate resin) | 3 - 6 |
| Pigment Blue 15:3 | 3 - 5 |

### Example 2 - Magenta ink composition

A magenta ink composition is prepared in accordance with Table 2 below, and with the same process as outlined in Example 1, with Pigment Red 122 taking the place of the Pigment Blue15:3, and EFKA 4340 taking the place of Disperbyk D-167. In this embodiment, EFKA 4340 is added to the dispersion before the milling process instead of afterwards.

**Table 2**

| **Ingredient** | **Weight** % |
|---|---|
| BEA (ethylene glycol monobutyl ether acetate) | 75 - 90 |
| Propylene carbonate | 3 - 6 |
| Gamma butyrolactone | 3 - 6 |
| EFKA 4340 (modified poly-acrylate) | 2 - 5 |
| Vinnol E15/45 (Vinyl chloride-vinyl acetate resin) | 2.5 - 4.5 |
| Pigment Red 122 | 4 - 6.5 |

### Example 3 - Yellow ink composition

A yellow ink composition is prepared in accordance with Table 3 below, and with the same process as outlined in Example 1, with the Pigment Yellow 129 and Pigment Yellow 150 taking the place of the Pigment Blue 15:3.

**Table 3**

| **Ingredient** | **Weight %** |
|---|---|
| BEA (ethylene glycol monobutyl ether acetate) | 75 - 90 |
| Propylene carbonate | 3 - 6 |
| Gamma butyrolactone | 3 - 6 |
| Disperbyk D-167 (surfactant) | 2 - 4 |
| Vinnol E15/45 (Vinyl chloride-vinyl acetate resin) | 2.5 - 4.5 |
| Pigment Yellow 129 | 0.1 - 1.5 |
| Pigment Yellow 150 | 1 - 4 |

### Example 4 - Black ink composition

A black ink composition is prepared in accordance with Table 4 below, and with the same process as outlined in Example 1, with the Pigment Black 7 taking the place of the Pigment Blue 15:3.

**Table 4**

| **Ingredient** | **Weight** % |
|---|---|
| BEA (ethylene glycol monobutyl ether acetate) | 75 - 90 |
| Propylene carbonate | 3 - 6 |
| Gamma butyrolactone | 3 - 6 |
| Disperbyk D-167 (surfactant) | 1 - 3 |
| Vinnol E15/45 (Vinyl chloride-vinyl acetate resin) | 4 - 6 |
| Pigment Black 7 (carbon black) | 2 - 6 |

### Example 5 - Light cyan ink composition

A light cyan ink composition is prepared in accordance with Table 5 below, and with the same process as outlined in Example 1, with the Pigment Blue 15:3 being loaded in the ink at a lower concentration.

**Table 5**

| **Ingredient** | **Weight %** |
|---|---|
| BEA (ethylene glycol monobutyl ether acetate) | 75 - 90 |
| Propylene carbonate | 3 - 6 |
| Gamma butyrolactone | 3 - 6 |
| Disperbyk D-167 (surfactant) | 0.5 - 3 |
| Vinnol E15/45 (Vinyl chloride-vinyl acetate resin) | 3.5 - 6 |
| Pigment Blue 15:3 | 0.1 - 2 |

### Example 6 - Light magenta ink composition

A light magenta ink composition is prepared in accordance with Table 6 below, and with the same process as outlined in Example 2.

**Table 6**

| **Ingredient** | **Weight %** |
|---|---|
| BEA (ethylene glycol monobutyl ether acetate) | 75 - 90 |
| Propylene carbonate | 3 - 6 |
| Gamma butyrolactone | 3 - 6 |
| EFKA 4340 (surfactant) | 0.5 - 3 |
| Vinnol E15/45 (Vinyl chloride-vinyl acetate resin) | 3 - 6 |
| Pigment Red 122 | 0.5 - 3 |

### Example 7 - Light cyan ink composition

An alternative light cyan ink composition is prepared in accordance with Table 7 below, and with the same process as outlined in Example 1, with the Pigment Blue 15:3 being loaded in the ink at a lower concentration, as well as multiple solvents present in the main solvent system and the second solvent system.

**Table 7**

| **Ingredient** | **Weight %** |
|---|---|
| BEA (ethylene glycol monobutyl ether acetate) | 35 - 45 |
| DPMA (Dipropylene glycol methyl ether acetate) | 35 - 45 |
| Hexanone | 1.5 - 3 |
| Propylene carbonate | 2 - 4 |
| Gamma butyrolactone | 3 - 6 |
| Disperbyk D-167 (surfactant) | 0.5 - 3 |
| Vinnol E15/45 (Vinyl chloride-vinyl acetate resin) | 3.5 - 6 |
| Pigment Blue 15:3 | 0.1 - 2 |

The inks prepared in accordance with the above examples can be applied to various substrates such as vinyl, PVC, papers, and other plastics. These inks exhibit improved print head firing frequency, improved dot spread on all substrates, a faster drying rate, improved dot control, improved dot gain, improved image quality, less graininess of the final print. Additionally, the second co-solvent system in these examples acts to increase the surface tension of the ink composition as a whole, and additionally, the gamma butyrolactone and/or resin can also increase the surface tension of these types of ink compositions as well, depending on the original surface tensions of the inks without these components and the amounts added to the ink compositions. Further, it is also noted that in the above ink examples, the second co-solvent includes propylene carbonate. It is, however, understood that each of the above described inks is modifiable to include other co-solvents in accordance with embodiments of the present invention. Furthermore, many of the quantities of each ink component are similar to the other examples. It should be noted that the quantities of each component can vary. Further, it is understood that other components not set forth above may be included in the ink compositions. Also, as in Example 7, any of the inks of Examples 1-6 can be modified to include two or more co-solvents from one or both categories of co-solvents, or alternatively, two or more resins, surfactants, etc., may also be used. In other words, the ink examples are merely exemplary, and choice and amounts of components can be modified accordingly to achieve desired results.

## Claims

1. A non-aqueous ink composition for ink-jet recording, comprising:
a) a milled pigment;
b) a surfactant;
c) a non-aqueous solvent system, including:
i. from 50 wt% to 95 wt% of ethylene glycol monobutyl ether acetate as a main co-solvent system having a surface tension less than 32 dynes/cm at 25 °C;
ii. from 1 wt% to 30 wt% of a second co-solvent system, wherein each co-solvent of the second co-solvent system has a surface tension of greater than 32 dynes/cm at 25 °C;
iii. from 1 wt% to 10 wt% of gamma butyrolactone;
d) at least 2 wt% of resin solubilized in the ink composition,
wherein the ink composition is ink-jettable, and
wherein the co-solvents of the second co-solvent system are selected from the group consisting of n-ethyl pyrrolidone, N-methylpyrrolidone, 1,3-butanediol, propylene carbonate, glyceryl acetate, 1,3-dimethyl-2-imidazolidinone, 2-Pyrrolidone, 1-octyl-2-pyrrolidone, and cyclohexanone.

2. The ink composition of claim 1, wherein the second co-solvent system acts to increase the overall surface tension of the ink composition as a whole.

3. The ink composition of claim 1, wherein the second co-solvent system is present in the composition in an amount of from 2 wt% to 8 wt%.

4. The ink composition of claim 1, wherein the second co-solvent system is a single co-solvent.

5. The ink composition of claim 1, wherein each co-solvent of the second co-solvent system has a surface tension greater than 36 dynes/cm at 25 °C.

6. The ink composition of claim 1, wherein the second co-solvent system includes at least one co-solvent selected from the group of n-ethyl pyrrolidone, propylene carbonate, N-methylpyrrolidone, 1,3-butanediol, and glyceryl acetate.

7. The ink composition of claim 1, wherein the gamma butyrolactone is present in the composition in an amount of from 2 wt% to 8 wt%.

8. The ink composition of claim 1, wherein the resin is solubilized in the ink composition in an amount of greater than 3 wt% of the ink composition as a whole.

9. The ink composition of claim 1, wherein the resin includes at least one member selected from the group of acrylics, polyesters, polyurethanes, vinyl chlorides, vinyl chloride-vinyl acetate resins, and cellulose-based resins.

10. An ink set comprising at least one ink composition as in one of claims 1 to 9.

11. An ink set including a cyan ink composition, a magenta ink composition, and a yellow ink composition, each being formulated in as in one of claims 1 to 9.

12. A method of printing an image, comprising ink-jetting an ink composition onto a media substrate, said ink composition as in one of claims 1 to 9.

13. The method of claim 12, wherein the media substrate includes plastic, glass, or metal.

14. The method of claim 12, wherein the media substrate includes paper.

## Patentansprüche

1. Nicht-wässrige Tintenzusammensetzung zur Tintenstrahlaufzeichnung, die Folgendes umfasst:
a) ein zerkleinertes Pigment;
b) ein Tensid;
c) ein nicht-wässriges Lösungsmittelsystem, das Folgendes beinhaltet:
i. 50 Gew.-% bis 95 Gew.-% Ethylenglykolmonobutyletherazetat als primäres Co-Lösungsmittelsystem mit einer Oberflächenspannung von weniger als 32 Dyn/cm bei 25°C;
ii. 1 Gew.-% bis 30 Gew.-% eines zweiten Co-Lösungsmittelsystems, wobei jedes Co-Lösungsmittel des zweiten Co-Lösungsmittelsystems eine Oberflächenspannung von mehr als 32 Dyn/cm bei 25°C hat;
iii. 1 Gew.-% bis 10 Gew.-% Gamma-Butyrolacton;
d) mindestens 2 Gew.-% an in der Tintenzusammensetzung gelöstem Harz,
wobei die Tintenzusammensetzung als Tintenstrahl ausgestoßen werden kann, und
wobei die Co-Lösungsmittel des zweiten Co-Lösungsmittelsystems ausgewählt sind aus der Gruppe bestehend aus N-Ethylpyrrolidon, N-Methylpyrrolidon, 1,3-Butandiol, Propylencarbonat, Glycerylazetat, 1,3-Dimethyl-2-imidazolidinon, 2-Pyrrolidon, 1-Octyl-2-pyrrolidon und Cyclohexanon.

2. Die Tintenzusammensetzung nach Anspruch 1, wobei das zweite Co-Lösungsmittelsystem wirkt, um die Gesamtoberflächenspannung der Tintenzusammensetzung als Ganzes zu erhöhen.

3. Die Tintenzusammensetzung nach Anspruch 1, wobei das zweite Co-Lösungsmittelsystem in der Zusammensetzung in einer Menge von 2 Gew.-% bis 8 Gew.-% vorhanden ist.

4. Die Tintenzusammensetzung nach Anspruch 1, wobei das zweite Co-Lösungsmittelsystem ein einzelnes Co-Lösungsmittel ist.

5. Die Tintenzusammensetzung nach Anspruch 1, wobei jedes Co-Lösungsmittel des zweiten Co-Lösungsmittelsystems eine Oberflächenspannung von mehr als 36 Dyn/cm bei 25°C hat.

6. Die Tintenzusammensetzung nach Anspruch 1, wobei das zweite Co-Lösungsmittelsystem mindestens ein Co-Lösungsmittel beinhaltet, das ausgewählt ist aus der Gruppe aus N-Ethylpyrrolidon, Propylencarbonat, N-Methylpyrrolidon, 1,3-Butandiol und Glycerylazetat.

7. Die Tintenzusammensetzung nach Anspruch 1, wobei das Gamma-Butyrolacton in der Zusammensetzung in einer Menge von 2 Gew.-% bis 8 Gew.-% vorhanden ist.

8. Die Tintenzusammensetzung nach Anspruch 1, wobei das Harz in der Tintenzusammensetzung in einer Menge von mehr als 3 Gew.-% der Tintenzusammensetzung als Ganzes gelöst ist.

9. Die Tintenzusammensetzung nach Anspruch 1, wobei das Harz mindestens ein Element ausgewählt aus der Gruppe aus Acrylen, Polyestern, Polyurethanen, Vinylchloriden, Vinylchloridvinylazetatharzen und zellulosebasierten Harzen beinhaltet.

10. Tintensatz, der mindestens eine Tintenzusammensetzung wie in einem der Ansprüche 1 bis 9 umfasst.

11. Tintensatz mit einer Cyantintenzusammensetzung, einer Magentatintenzusammensetzung und einer Gelbtintenzusammetzung, wobei jede wie in einem der Ansprüche 1 bis 9 formuliert ist.

12. Verfahren zum Drucken eines Bildes, wobei das Verfahren das Ausstoßen einer Tintenzusammensetzung in Strahlform auf ein Mediensubstrat umfasst, wobei die Tintenzusammensetzung wie in einem der Ansprüche 1 bis 9 ist.

13. Das Verfahren nach Anspruch 12, wobei das Mediensubstrat Kunststoff, Glas oder Metall beinhaltet.

14. Das Verfahren nach Anspruch 12, wobei das Mediensubstrat Papier beinhaltet.

## Revendications

1. Composition d'encre non aqueuse pour enregistrement par jet d'encre, comprenant :
a) un pigment broyé ;
b) un agent tensio-actif ;
c) un système solvant non aqueux, comprenant :
i. de 50 % en poids à 95 % en poids de monobutyl éther acétate d'éthylène glycol en tant que système co-solvant principal ayant une tension de surface inférieure à 32 dynes/cm à 25 °C ;
ii. de 1 % en poids à 30 % en poids d'un second système co-solvant, chaque co-solvant du second système co-solvant ayant une tension de surface supérieure à 32 dynes/cm à 25 °C ;
iii. de 1 % en poids à 10 % en poids de gamma-butyrolactone ;
d) au moins 2 % en poids de résine solubilisée dans la composition d'encre,
la composition d'encre étant projetable par jet d'encre, et les co-solvants du second système co-solvant étant choisis dans le groupe consistant en N-éthyl pyrrolidone, N-méthylpyrrolidone, 1,3-butanediol, carbonate de propylène, acétate de glycéryle, 1,3-diméthyl-2-imidazolidinone, 2-pyrrolidone, 1-octyl-2-pyrrolidone et cyclohexanone.

2. Composition d'encre selon la revendication 1, dans laquelle le second système co-solvant agit pour augmenter la tension de surface globale de la composition d'encre dans son ensemble.

3. Composition d'encre selon la revendication 1, dans laquelle le second système co-solvant est présent dans la composition dans une quantité allant de 2 % en poids à 8 % en poids.

4. Composition d'encre selon la revendication 1, dans laquelle le second système co-solvant est un co-solvant unique.

5. Composition d'encre selon la revendication 1, dans laquelle chaque co-solvant du second système co-solvant a une tension de surface supérieure à 36 dynes/cm à 25 °C.

6. Composition d'encre selon la revendication 1, dans laquelle le second système co-solvant comprend au moins un co-solvant choisi dans le groupe consistant en N-éthyl pyrrolidone, carbonate de propylène, N-méthylpyrrolidone, 1,3-butanediol et acétate de glycéryle.

7. Composition d'encre selon la revendication 1, dans laquelle la gamma-butyrolactone est présente dans la composition dans une quantité allant de 2 % en poids à 8 % en poids.

8. Composition d'encre selon la revendication 1, dans laquelle la résine est solubilisée dans la composition d'encre dans une quantité supérieure à 3 % en poids de la composition d'encre dans son ensemble.

9. Composition d'encre selon la revendication 1, dans laquelle la résine comprend au moins un élément choisi dans le groupe consistant en les acryliques, les polyesters, les polyuréthanes, les chlorures de vinyle, les résines chlorure de vinyle-acétate de vinyle et les résines à base de cellulose.

10. Ensemble d'encres comprenant au moins une composition d'encre telle que définie dans l'une des revendications 1 à 9.

11. Ensemble d'encres comprenant une composition d'encre cyan, une composition d'encre magenta et une composition d'encre jaune, chacune étant formulée telle que définie dans l'une des revendications 1 à 9.

12. Procédé d'impression d'une image, comprenant la projection par jet d'encre d'une composition d'encre sur un substrat de support, ladite composition d'encre étant telle que définie dans l'une des revendications 1 à 9.

13. Procédé selon la revendication 12, dans lequel le substrat de support comprend une matière plastique, du verre ou du métal.

14. Procédé selon la revendication 12, dans lequel le substrat de support comprend du papier.
